# EUROPEAN PATENT APPLICATION

(11) **EP 1 469 619 A2**
(43) Date of publication of application: **20.10.2004**
(21) Application number: 04101488.7
(22) Date of filing: 13.04.2004
(51) Int. Cl.: H04B 10/00

(54) **Wireless power transmission**

(30) Priority: 17.04.2003 FI 20030593
(71) Applicant: Ailocom OY, 33100 Tampere (FI)
(72) Inventor: Tuominen, Juha, 33950 Pirkkala (FI); Vilkko, Matti, 33500 Tampere (FI); Nummela, Ville, 33500 Tampere (FI)
(74) Representative: Kaukonen, Juha Veikko

(57) **Abstract**

A method for transmitting power wirelessly between a power transmitter comprising a light source, means for directing the light emitted by the light source in a desired direction, and means for controlling the intensity of the light emitted by the light source, and at least one power receiver comprising a photo-detector for receiving emitted light and for converting it into electric current. The light source of the power transmitter transmits a parallel light, the intensity of which is substantially less than the allowed maximum eye exposure. The photo-detector of the power receiver detects the light emitted by the light source and determines the integrity of the light beam, and the power receiver transmits a control signal to the power transmitter. The intensity of the light transmitted by the light source of the power transmitter is increased in response to receiving from the power receiver a control signal.

## Description

### FIELD OF THE INVENTION

The invention relates to wireless power transmission and particularly to the utilization of light sources in the transmission.

### BACKGROUND OF THE INVENTION

Various surveillance and monitoring systems utilizing camera monitoring have become more common during the last few years. A surveillance system comprising several, perhaps dozens of, cameras typically requires a great deal of cabling and wiring. The cameras require a transmission path for transmitting image data to the control point, and this transmission path is typically a telecommunications cable. The cameras also require power supply that is typically implemented by cabling from the public electrical power system, possibly through a transformer. Thus, a high percentage of the costs of a camera surveillance system, as high as over fifty percent, is made up of cabling and wiring. Fixed cabling also makes the alteration of a surveillance system or its shift temporarily to another control point very difficult.

However, arrangements are known, in which the surveillance cameras are wireless in the sense that the transmission path used for transmitting their image data is a wireless connection, for instance a short-range radio frequency connection. Several industry standards have already been developed for solutions based on the short-range radio frequency technique, examples of which are Bluetooth, WLAN (Wireless Local Area Network) based particularly on the IEEE standard 802.11, and HomeRF. The image data of the surveillance cameras can be transmitted to the control point either directly or through a base station by utilizing one of these techniques, for instance.

A wireless telecommunications connection does not, however, remove the problem that to function, the cameras require power supply, i.e. typically an electric cable supply. Cameras can be made battery-driven, but the batteries need to be recharged at regular intervals. This, in turn, requires specific wiring for the charging arrangement, or else the batteries need to be detached each time for recharging and transferred for a separate charger. Therefore, especially in connection with wireless surveillance systems, there is also a need for wireless power supply.

However, in wireless power supply, there are several known problems. Various solutions based on inductive or radio frequency power transmission are very weak in efficiency, and at higher power, electromagnetic radiation may cause interference to other, surrounding devices. Implementing wireless power transmission by utilizing a light source, such as laser, enables better efficiency than radio frequency power transmission, for instance. A problem with wireless power transmission based on a light source is safety especially in the premises being monitored, in other words, in premises where people are present, since the power of a sufficiently efficient laser is substantially life-threatening. Even if significantly reduced, the power levels required for sufficient efficiency in a laser are high enough to at least severely damage vision in case of eye exposure.

### BRIEF DESCRIPTION OF THE INVENTION

Thus, it is an object of the invention to develop an improved method for wireless power transmission, and an apparatus implementing the method in such a manner that the above-mentioned problems are solved. The object of the invention is achieved by a method, system, transmitter, receiver, and surveillance system that are characterized by what is stated in the independent claims.

Preferred embodiments of the invention are disclosed in the dependent claims.

The invention is based on transmitting power wirelessly in a system that comprises a power transmitter comprising a light source, directing means for directing the light emitted by the light source in a desired direction, and means for controlling the intensity of the light emitted by the light source. The system further comprises at least one power receiver comprising a photo-detector for receiving emitted light and for converting it into electric current. In the inventive procedure for transmitting power wirelessly, the light source of the power transmitter transmits a substantially parallel light, the intensity of which is substantially less than the allowed maximum eye exposure. The photo-detector of the power receiver detects the light emitted by the light source and determines the integrity of the detected light beam, and if the received light beam is found to be intact, a control signal is transmitted from the power receiver to the power transmitter. The intensity of the light transmitted by the light source of the power transmitter is in turn increased in response to receiving said control signal from the power receiver concerning the integrity of the light beam.

According to a preferred embodiment of the invention, a control signal is transmitted at regular intervals from the power receiver to the power transmitter, if the received light beam is found to be intact. If a disturbance is detected in the light emitted by the light source, the transmission of the control signal to the power transmitter is stopped, whereby the light source of the power transmitter is switched off.

According to a preferred embodiment of the invention, the photo-detector of the power receiver is a photo-detector matrix, and the integrity of the light beam emitted by the light source is determined on the basis of the active matrix frames of the photo-detector matrix.

According to a preferred embodiment of the invention, the photo-detector matrix is a prismatic square matrix, the planes of which are set so that an incoming light beam is reflected back to its direction of incidence through reflection via at least two planes.

As one aspect of the invention, a wireless surveillance system is disclosed that comprises a base station and at least one surveillance device, such as a camera. The base station comprises a radio frequency transceiver for establishing a telecommunications connection to the surveillance device, and the surveillance device in turn comprises means for generating surveillance data and a radio frequency transceiver for transmitting the surveillance data wirelessly to said base station. The base station also comprises a power transmitter that comprises a light source, means for directing the light emitted by the light source in a desired direction, and control means for controlling the intensity of the light emitted by the light source such that the intensity is substantially less than the allowed eye exposure, and a receiver for receiving a control signal transmitted by the power receiver, the control signal indicating the integrity of the received emitted light beam. The surveillance device correspondingly comprises a power receiver that comprises a photo-detector for detecting the emitted light and for determining the integrity of the received light beam, and transmission means responsive to said determination of integrity that are arranged to transmit a control signal to the power transmitter in response to determining the integrity of the light beam. In response to the reception of the control signal, the control means of the power transmitter are then arrange to increase the intensity of the light transmitted by the light source of the power transmitter.

An advantage of the method and system of the invention is that it is possible to both safely direct the light beam at the receiver and to perform the actual power transmission with one light source. The directing is done with low-intensity light, and the integrity of the received light beam is examined at the same time. The indication of the integrity of the light beam and the control signal transmitted based thereon form a simple safety element for the system that is the starting point of the system. If an obstacle blocks the light emitted by the light source, the transmission of the control signal is stopped, and in response to this, the supply of the high-intensity light is switched off immediately, whereby the light cannot cause any damage. Thus, the procedure of the invention enables safe wireless power transmission by means of light sources. Another advantage of the invention is that the photo-detector matrix used in the receiver provides a simple way of determining the integrity of a light beam.

A yet further advantage of the invention is that the power receiver can be connected to any device using essentially low power, such as to office equipment, personal or entertainment electronics devices, the power supply of which can preferably be arranged wirelessly from one power transmitter located in the same space. Yet another advantage of the invention is that in response to the registration messages transmitted by the power receivers, the power transmitter is arranged to scan the surrounding space to find receivers, and to store the location of the receivers into its memory, whereby the directing of the transmitter at the receivers is quick, and power can preferably be supplied alternately to several receivers. A yet further advantage of the invention is that it is possible to obtain a significantly better power transmission efficiency than in the prior-art solutions, substantially an efficiency of at least 20%.

Further, an advantage of the surveillance system of the invention is that the power supply of the surveillance devices can preferably be arranged wirelessly from one base station in the same space, whereby the installation and modification of the system is easy and inexpensive. In addition, the control signal is transmitted by the existing radio frequency transceiver in the base station and surveillance devices, which advantageously enables for the control signal a fast and reliable connection which also does not cause any additional costs.

### BRIEF DESCRIPTION OF THE FIGURES AND APPENDICES

The invention will now be described in greater detail by means of preferred embodiments and with reference to the attached drawings, in which
Figure 1 is a block diagram of the basic structure of the system of the invention,
Figure 2 is a schematic view of the properties of a few light sources and photo-detectors utilized in the invention,
Figure 3 shows in a simplified manner a photo-detector matrix of an embodiment of the invention,
Figure 4 shows a prismatic square pattern in a photo-detector matrix according to an embodiment of the invention,
Figure 5 shows a procedure for performing a search for receivers and for performing power transmission according to an embodiment of the invention,
Figures 6a and 6b are block diagrams of a transmitter unit and receiver unit implemented according to an embodiment of the invention, and
Appendices 1 and 2 show a few values of the maximum permissible exposure of a laser beam by means of the standard ANSI Z136.1, Tables 5a and 5b.

### DETAILED DESCRIPTION OF THE INVENTION

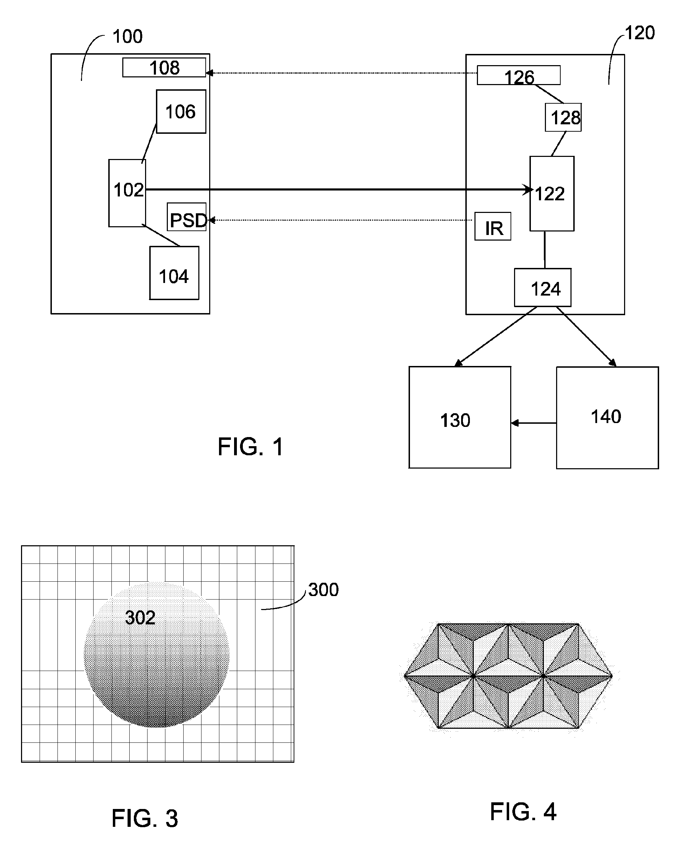

With reference to Figure 1, the following describes a basic structure of the system. The system comprises a transmitter 100, a receiver 120 connected to an external power-consuming device 130, and charging means 140, typically a battery, for storing electric energy. The transmitter 100 further comprises a light source 102, directing means 104 for directing the light emitted by the light source 102 at the receiver, and control means 106 for controlling the intensity of the light emitted by the light source 102. The transmitter further comprises a receiver 108 for receiving a control signal. The receiver 120 comprises a photo-detector 122 for receiving the light intensity emitted by the light source 102, and conducting means 124 for conducting the electric current generated from the received light intensity by the photo-detector to the external device 130 and to the charging means 140. The receiver further comprises a transmitter 126 for transmitting a control signal to the transmitter 100.

The power transmission process in the system is basically the following: the transmitter 100 switches on the light source 102 in such a manner that its transmission power is substantially so low that it will not cause danger to eyes, for example. If the transmitter 100 has not been directed at the receiver 120 in advance, the directing is carried out by means of the light source 102 and the directing means 104. During directing, the light source 102 operates in directing mode, in which the intensity of the light source is adjusted by the control means 106 to be very low so that a light beam emitted by the light source can be focused on the eye for quite a long time without damaging the eye.

To direct the transmitter at the receiver, the transmitter sets the light source 102 to directing mode and starts to scan the surroundings of the transmitter at the location where it has been placed. The scanning is preferably carried out as a predetermined two-dimensional systematic path which is repeated through the space around the transmitter until the light beam emitted by the light source 102 comes into contact with the receiver. The photo-detector 122 of the receiver is arranged to receive light on a wavelength corresponding to the one on which the light beam is transmitted. When the light beam comes into contact with the photo-detector 122 of the receiver, it is focused on the photo-detector in a manner to be described below in greater detail. One step in the directing is the checking of the integrity of the received light beam, whereby an intact light beam is interpreted as an indication of an unobstructed path of light.

When the direction and integrity of the light beam at the photo-detector of the receiver is checked, the intensity of the light source 102 in the transmitter can be significantly increased by means of the control means 106, whereby the light emitted by the light source begins the actual power transmission, i.e. the light source operates in power mode. The photo-detector 122 of the receiver transforms the received light intensity into electric current that is conducted on by means of the conducting means 124 to the external device 130 and/or battery 140. The procedure of the invention achieves a significantly better power transmission efficiency than the prior-art solutions. With the present light sources and photo-detectors, it is possible to obtain an efficiency of at least 20%.

A light emitting diode LED or a laser, for instance, can be used as a light source in the system. The light source to be used and its wavelength shall be correspondingly matched with the photo-detector to be used. This is illustrated by the diagram according to Figure 2, which shows the quantum efficiency of photo-detectors made of different materials, i.e. the efficiency of reception on different wavelengths of light. The vertical axis shows the quantum efficiency and the horizontal axis shows the wavelength of light and, correspondingly, the photon energy transmitted on the wavelength, the photon energy being inversely proportional to the wavelength. Further, Figure 2 shows the wavelength ranges of a few presently used light sources.

Figure 2 shows that if a maximum amount of power is to be transmitted, the shortest possible wavelength is preferred, because, this way, the amount of transmitted photon energy increases correspondingly. However, so as to be able to utilize the transmitted power, the used photo-detector shall be adapted to the corresponding wavelength. If the longest possible wavelength, or greatest photon energy, is to be used, a laser having a wavelength of substantially 0.30 um can be used as the light source, in which case an Ag-Zns photo-detector having a fairly high quantum efficiency can correspondingly be used as the photo-detector. Correspondingly, if the quantum efficiency is to be maximized, an Si photo-detector in the range of approximately 0.8 um can be used as the photo-detector, in which case a light emitting diode, laser or possibly LED operating in the infrared range can be used as the light source. It is also possible to use other materials than those mentioned in Figure 2 as the photo-detector in the invention. It should be noted that only preferred current light sources and photo-detectors applicable to the invention are described herein by way of example. The implementation of the invention is, however, not restricted to the used laser and/or photo-detector or the wavelengths these utilize, but as the technology advances, it is also possible to use as the light source and photo-detector, components made of other materials and using other wavelengths.

The system is intended for use in supplying power to various surveillance systems, for instance, in which case the system is also used in premises, where people and for instance pets are present. Therefore, the wavelength and intensity of the light generated in the light source 102 should also be selected in power mode so that a short-term eye contact with the light beam is possible without damage to the eye. The system should further preferably comprise means for detecting an obstacle blocking the light beam and for switching off the transmission power, or at least quickly reducing it substantially, in response to detecting an obstacle.

In practice, the detection of an obstacle can be implemented by using a photo-detector 122 in the receiver, the photo-detector being in the form of a matrix such that each frame of the matrix is arranged to separately detect the received light beam. Such a photo-detector matrix can be implemented in such a manner, for instance, that each matrix frame comprises one or preferably several photo-detector components in the manner of a CCD cell. One such photo-detector is shown in Figure 3. The surface area of the photo-detector matrix 300 is preferably slightly larger than the cross-sectional area of the emitted light beam 302. The receiver comprises a processor 128 connected to the photo-detector matrix 122, which is arranged to determine the shape of the edge of the received light beam and, with its help, the integrity of the light beam on the basis of the active frames of the photo-detector matrix. The shape of the received light beam should be substantially round, if the light beam approaches the photo-detector substantially perpendicularly, or it can be in the shape of an ellipse, if the incoming light beam forms a sharp angle with respect to the normal of the photo-detector plane. The processor 128 is preferably arranged to detect these edge shapes on the basis of the active frames of the photo-detector matrix. If the shape of the received light beam differs from these allowed shapes in that the shape is not intact, the system assumes that there is an obstacle blocking the transmission path of the light beam and the transmission power supply is switched off or at least substantially reduced.

According to a preferred embodiment, the light beam transmitted in power mode is modified such that the intensity of the light beam is higher in the middle of the beam than on the edges. This way, the majority of the power is transmitted in the middle of the light beam and a lower-intensity light curtain is formed around it; the curtain, however, being sufficient in power, for instance in the range of the intensity of directing mode, to allow the determination of the integrity of the light beam.

The supply of transmission power is preferably controlled with the above-mentioned control signal. The receiver 120 comprises a transmitter 126 for transmitting the control signal to the transmitter 100, and the transmitter 100 correspondingly comprises a receiver 108 for receiving the control signal. The control signal transmitter 126 can preferably be a short-range radio-frequency transmitter, such as a Bluetooth or WLAN transmitter. Alternatively, the control signal can for instance be transmitted with a relatively weak omnidirectional LED that operates in the infrared range. When using a radio transmitter or an omnidirectional LED, the relative positions of the transmitter and receiver do not have any essential significance to the reception of the control signal in the transmitter. The control signal controlling the transmission of the power beam can be called a security link.

The operational control of the power transmitter can preferably be based on the fact that if the processor 128 finds that the light beam received from the transmitter operating in power mode is intact, the processor 128 instructs the control signal transmitter 126 to transmit a control signal to the transmitter 100 at regular intervals. The time between the transmissions of two control signals is substantially shorter than the time defined as safe for the eye, i.e. the maximum permissible exposure (MPE) of the light beam. The maximum permissible exposure is a function of the wavelength and intensity (W/cm²) of the light beam used to transmit power. The standard ANSI Z136.1, some example values of which are shown in appendices 1 and 2, defines these values in more detail. The control means 106 connected to the control signal receiver 108 monitor the reception of the control signal. If the reception of the control signal in the transmitter is delayed over a predefined time (in other words, one control signal is not received), the control means 106 immediately switch off the power supply of the light source 102, or at least reduce the supplied power substantially.

When using lasers, the light to be transmitted can be directly directed at the desired supply point. In such a case, the directing of the light source can be implemented for instance as processor-driven laser deflection, whereby the lasers are directly directed at the power receiver by using reversing mechanics and control electronics connected thereto. If the light sources are light emitting diodes LED, for instance, the directing can be done with mirrors by mirror-guided deflection. In such a case, the light source is preferably directed with a sufficient number of mirror servos that are controlled with a separate control unit. The deflection of lasers can also be done by mirror-guided deflection.

According to a preferred embodiment of the invention, the photo-detector matrix of the power receiver is a prismatic square matrix as shown in Figure 4, whereby uncontrolled diffuse reflection is preferably avoided. The surfaces of the prismatic square matrix are preferably positioned such that a light beam coming to the photo-detector is reflected back to its direction of incidence in such a manner, however, that the light that is reflected back travels via at least two, often as many as three, prismatic surfaces. In such a case, the light that is reflected back loses energy in every change of direction and returns to its direction of incidence, whereby the reflections that arrive at the power transmitter are so weak that they pose no threat to eyes. In addition, it is possible to increase the efficiency of the power receiver by means of the prismatic square matrix, because the light energy from the reflections can be collected using one, often even two additional surfaces.

According to a preferred embodiment of the invention, the radio connection used as the security link can also be utilized in finding and directing receivers. The power receiver can register to the power transmitter by establishing a radio connection to the power transmitter and by transmitting for instance its device identifier at the same time. The power receiver also preferably comprises a light emitting diode operating in the infrared range (IR-LED), which the power receiver switches on after the transmission of the registration message. The radio connection can preferably also be bi-directional; in other words, both the power transmitter and power receiver comprise a radio transceiver, and, in response to the registration message, the power transmitter transmits an acknowledgement to the power receiver and asks it to switch on the IR-LED. The power transmitter in turn comprises a position sensing detector (PSD) diode and a wide-angle optic, such as a wide-angle lens, connected to it. By means of the PSD diode, an approximate location of the power receiver's IR-LED can be defined very quickly.

When the power transmitter has defined the approximate location of the power receiver's IR-LED, it directs the light source 102 in directing mode, i.e. at a low intensity, towards the approximate location of the power receiver and begins scanning. The scanning is done in a predetermined path that is repeated in the direction of the approximate location of the power receiver until the scanning beam comes into contact with the receiver. When the scanning beam comes into contact with the photo-detector of the receiver, the power receiver communicates this to the power transmitter through the security link. Because the scanning is preferably performed at a high rate, the directing can be performed such that the security link indicates the momentary contact of the scanning beam, which is naturally received at the base station after a slight delay. The transmitter then stops the scanning process and moves the scanning beam slowly backwards the distance travelled during said delay until the connection is re-established. The power receiver then transmits an acknowledgement over the security link, and in response to this, the power transmitter locks the direction of the light source. After this, the shape of light beam received by the photo-detector of the power receiver is checked as described above. If it seems that the light beam only partly hits the photo-detector, the power receiver transmits to the power transmitter a request to fine-tune the direction as a spiral path, for instance. When the light beam is fully directed at the photo-detector and its shape complies with the allowed shapes, an acknowledgement is transmitted to the power transmitter, and, in response to it, the power transmitter increases the intensity of the light beam and begins the actual power transmission. The transmitter also determines the location coordinates of the receiver and, if necessary, continues to search for other receivers in the space.

The power transmission system described above can preferably be applied to different surveillance systems, which typically use camera surveillance. Surveillance systems of this type can use wireless surveillance cameras that are arranged to transmit image data over a wireless connection, such as a short-range radio-frequency connection. Therefore, as one aspect of the invention a surveillance system is disclosed, comprising a base station and one or more surveillance devices, such as cameras or measuring instruments. The base station comprises a radio frequency transceiver for establishing a telecommunications connection to the surveillance devices which also comprise a radio frequency transceiver. The base station controls the operation of the surveillance devices through the telecommunications connection, and correspondingly, the surveillance devices transmit surveillance data, such as image data from the cameras, to the base station. The used radio frequency telecommunications connection can for instance be Bluetooth, IEEE 802.11-based WLAN, or HomeRF, the adaptation of which to data transmission is known per se to a person skilled in the art. In addition to this, the base station comprises a power transmitter of the type described above for wireless power transmission, and each surveillance device correspondingly comprises a power receiver of the type described above. The radio frequency transceiver of the surveillance device can also preferably be utilized in transmitting a control signal to the power transmitter. Correspondingly, the transceiver of the base station can be used to receive the control signal.

Thus, the power supply of the surveillance devices can preferably be arranged wirelessly from one base station in the same space, whereby the installation and modification of the system is easy and inexpensive. In addition, the fact that the control signal is transmitted by the existing radio frequency transceivers in the base station and surveillance devices enables for the control signal a fast and reliable connection, which also does not cause any additional costs.

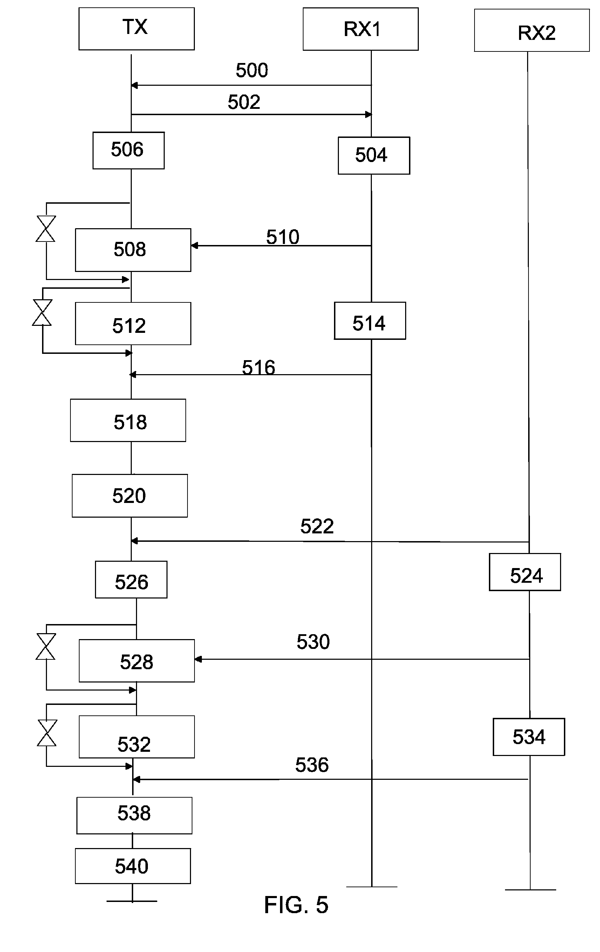

It should be noted that one power transmitter could preferably wirelessly supply power to several different power receivers and devices connected thereto. Figure 5 shows an MSC diagram illustrating the search for power receivers and power supply in a space having one power transmitter TX and two power receivers RX1 and RX2. The positioning of the receivers can preferably be initiated by the receivers; in other words, the first receiver RX1 transmits over the security link a registration message to the transmitter (500). If the radio connection of the security link is bi-directional, the power transmitter TX transmits an acknowledgement to the power receiver RX1 and asks it to switch on the IR-LED (502). If a unidirectional radio connection from the power receiver RX1 to the power transmitter TX is used as the security link, the power receiver RX1 switches on the IR-LED automatically after the transmission of the registration message (504). The power transmitter TX, in turn, activates the PSD diode and quickly determines an approximate location of the IR-LED of the power receiver RX1 (506).

After this, the power transmitter TX directs the light source 102 in directing mode towards the approximate location of the power receiver RX1 and begins scanning (508). The light beam comes momentarily into contact with the photo-detector of the first receiver RX1, and, in response thereto, the power receiver RX1 transmits a notification to the transmitter TX over the security link (510). The transmitter TX stops scanning and returns slowly to re-direct the light beam to the photo-detector (512). When the directing is correctly performed, the shape of the light beam received by the photo-detector of the power receiver RX1 is checked (514). If the light beam in found to be intact, the power receiver RX1 transmits a security link notification to the power transmitter TX (516). The power transmitter TX determines the coordinates of the photo-detector of the first receiver RX1 and stores them into memory (518), after which the transmitter TX sets the light source into power mode and begins supplying power to the power receiver RX1 (520).

Next, the power transmitter TX receives a registration message from the second power receiver RX2 (522). The power receiver RX2 switches on its IR-LED (524) and the power transmitter activates its PSD diode and determines an approximate location for the IR-LED of the power receiver RX2 (526). The power transmitter TX again directs the light source 102 in directing mode towards the approximate location of the power receiver RX2 and begins scanning (528). The light beam comes momentarily into contact with the photo-detector of the first receiver RX2, and, in response thereto, the power receiver RX2 transmits a notification to the transmitter TX over the security link (530). The transmitter TX slowly focuses the scan to the photo-detector (532). When the directing is correctly performed, the shape of the light beam received by the photo-detector of the power receiver RX2 is checked (534). If the light beam in found to be intact, the power receiver RX2 transmits a security link notification to the power transmitter TX (536). The power transmitter TX determines the coordinates of the photo-detector of the second receiver RX2 and stores them into memory (538), after which the transmitter TX sets the light source into power mode and begins supplying power to the power receiver RX2 (540).

It should be noted that the above describes both the positioning of the receivers and their power supply in connection with the positioning. In practice, the positioning process and power supply process can, if necessary, be separated from each other in such a manner that the first step is to position the receivers and store their location coordinates into memory. Power supply to the receivers can then later be started on the basis of the coordinates without having to re-position them.

The positioning process of the receivers described above is preferably initiated by the receivers, whereby the positioning of a new receiver in the space always begins in response to a registration message transmitted by the receiver, after which the transmitter TX re-starts the above scanning process. The location coordinates of new devices are defined correspondingly using scanning, after which the power transmitter TX stores the coordinates into memory. The coordinates of the existing devices in the space are already stored into the memory of the transmitter TX, so during new scanning cycles, the old devices can preferably be ignored, which speeds up the scanning of the space.

The actual power transmission to several receiving devices is done by supplying power to each supply point for a specific time in power mode, after which the power of the light source of the transmitter is set to directing mode and directed at the next supply point. This can preferably be done without scanning, because the coordinates of the supply points are already defined earlier and stored into the memory of the transmitter. When the light source in directing mode is directed at the photo-detector of the next receiver, said receiver sets up the security link, by which the transmitter knows that the directing was achieved without problems and it can set the power of the light source to power mode. The transmitter again supplies power for a specific time, sets the power to directing mode and moves on to the next supply point.

It should be noted that power supply times of different lengths could be defined for different power receivers (RX1/RX2). The preferred power supply time of each power receiver can be indicated to the transmitter in information attached to the security link signal, for instance. Correspondingly, the transmitter TX comprises means for detecting the information defining the power supply time and means for defining the actual power supply time to be used for each receiver, which time depends on several factors, such as the power requested by the receivers, the number of receivers, the time required for re-direction, etc.

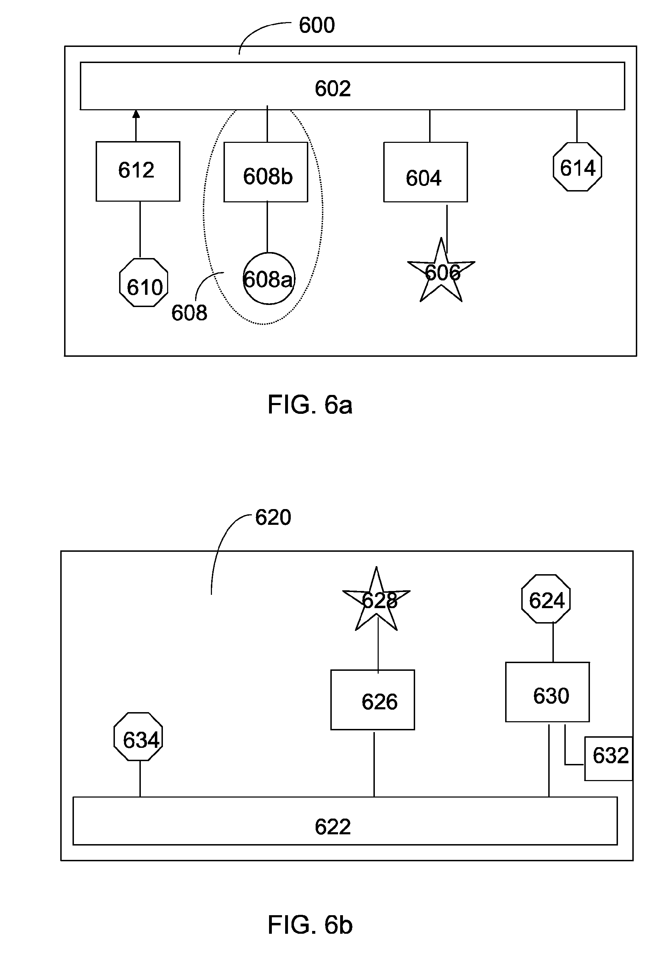

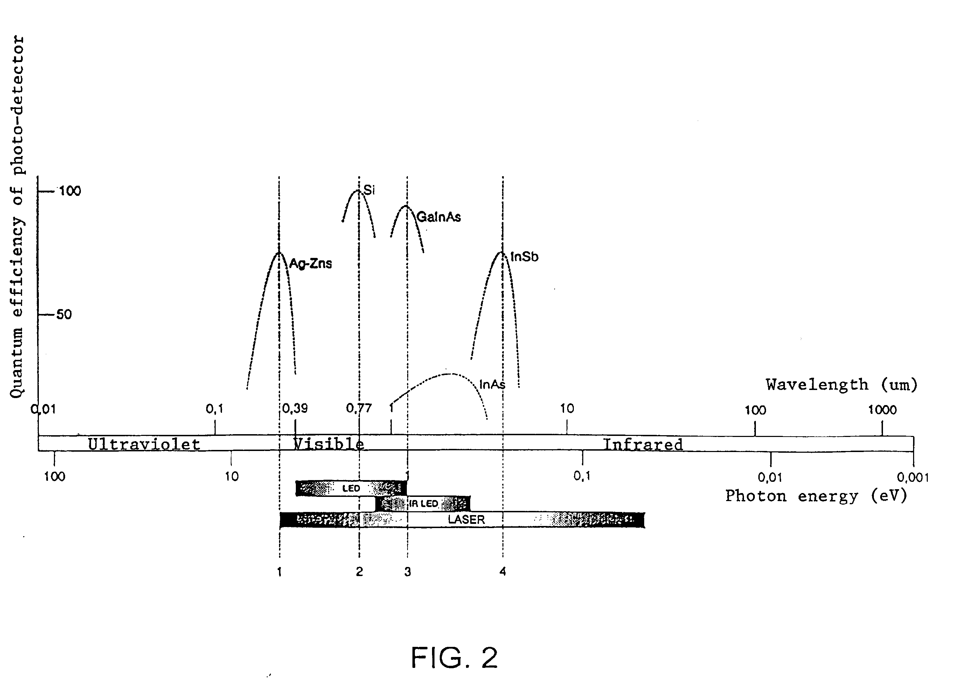

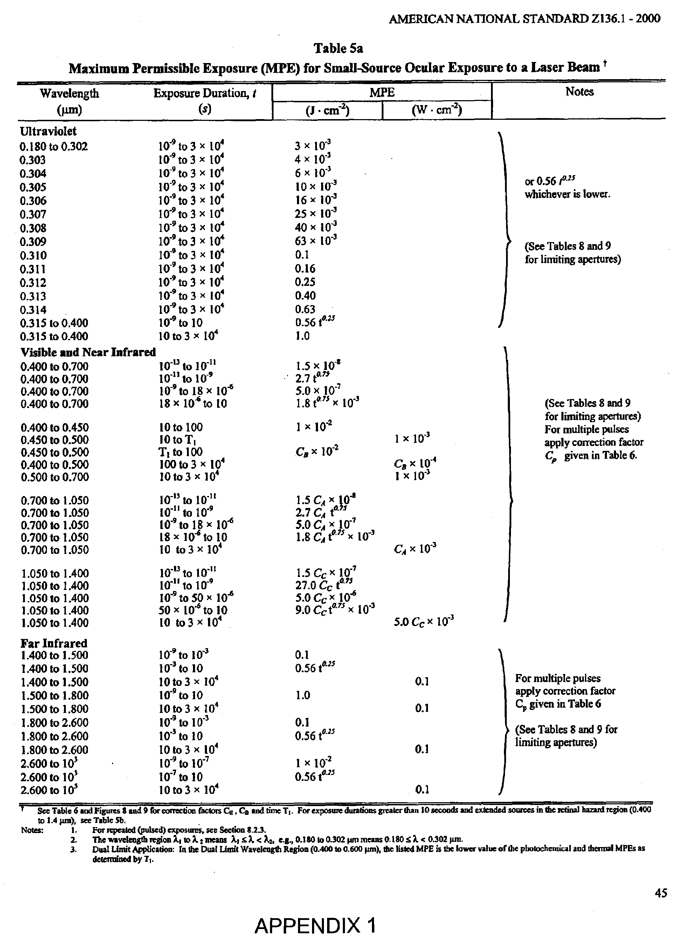

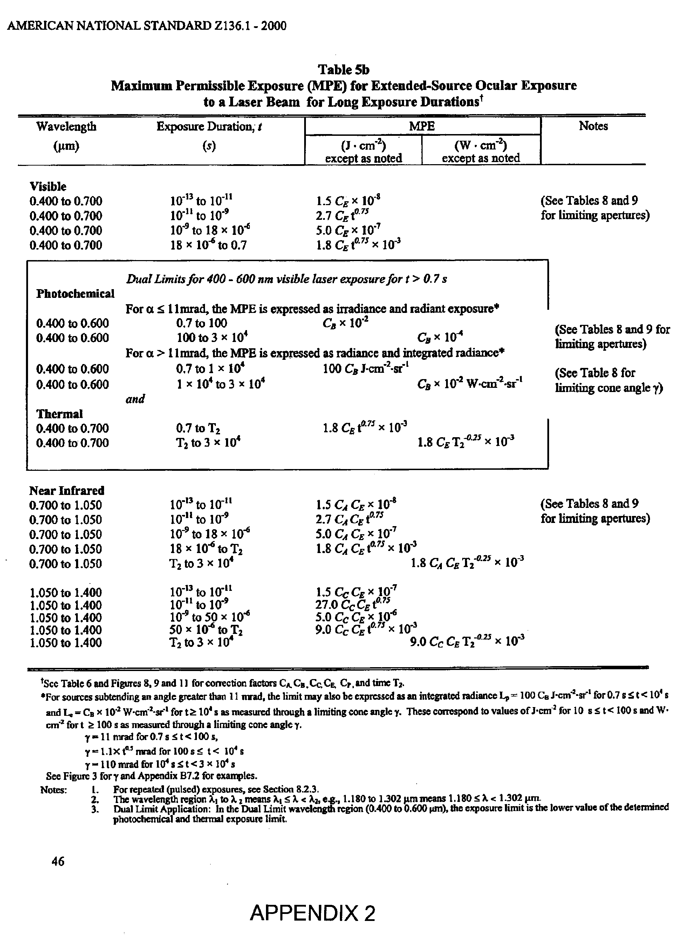

Figures 6a and 6b are simplified views of the functional blocks of a power transmitter unit 600 and a power receiver unit 620 of the invention. The power transmitter unit 600 comprises a transmitter control logic 602 that can be advantageously implemented for example as programmable ICs, software, or as a combination of these. During the operation of the device, the control logic 602 controls a supply control circuit 604 of the light source that controls the operation of the actual power source (laser) 606. Further, the control logic 602 controls the deflection of the light source to the desired supply point. The deflection is carried out by a deflection unit 608 which can be implemented for example as micro circuit-driven laser deflection, in which case the lasers themselves are directed directly at the receiver, or as mirror-guided deflection, the directing being then carried out with mirrors, if light emitting diodes LED, for example, are used as light sources. The deflection unit 608 then preferably comprises a sufficient number of mirror servos 608a and a control unit 608b controlling them. An essential element in the safe operation of the transmitter unit 600 is a security link receiver 610, from which the received security link signal is fed to the control unit 602 through an amplifier 612. In addition, the transmitter unit comprises a PSD diode 614 for the approximate positioning of the receiver units. On the basis of the PSD diode signals, the control logic 602 adjusts the deflection of the light source towards the receiver unit.

Figure 6b illustrates the functional blocks of the receiver unit 620 of the invention. The receiver unit 620 also comprises a control logic 622, which can be implemented for example as programmable ICs, software or as a combination of these, such as a separate processor. A photo-detector matrix 624 receives a light beam transmitted by the light source 606 of the transmitter unit. From the shape of the incoming directing-mode light beam, the control logic 622 of the receiver decides whether the path of the light beam is unobstructed and, if it is, the logic instructs a supply circuit 626 of the security link to start transmitting a security link signal through a transmitter 628, which preferably is a low-power radio transmitter. The photo-detector matrix 624 also serves as the receiver of the actual transmitted power, and from there the electric current converted from the light power received from the photo-detector matrix is supplied through a control unit 630 of charging to an interface 632 and from there on either to an external device or to charging means, such as a battery. The receiver unit also comprises a light emitting diode operating in the infrared range that is switched on to speed up the positioning of the receiver unit after the transmitter 628 transmits a registration message to the transmitter unit.

The power transmission system described above can be applied to several different devices. The system can especially be used in different surveillance and alarm systems, in which wired power supply may be difficult to arrange. These include for example wireless surveillance cameras, motion detectors, diverse surveillance sensors and alarm devices. The surveillance system according to one preferred embodiment of the invention described above is one example of such an application. The receiver unit can also be arranged to office equipment, such as printers, portable computers, keyboards, wireless network base stations or phones, or to different personal or entertainment electronics devices, such as radio and stereo equipment, active loudspeakers, phone chargers, etc. The application is naturally not restricted to the above-mentioned devices.

It is apparent to a person skilled in the art that as technology advances, the basic idea of the invention can be implemented in various ways. The invention and its embodiments are therefore not restricted to the above examples, but they may vary within the scope of the claims.

## Claims

1. A method for transmitting power wirelessly in a system that comprises a power transmitter and at least one power receiver, the power transmitter comprising a light source, means for directing the light emitted by the light source in a desired direction, and means for controlling the intensity of the light emitted by the light source, and the power receiver comprising a photo-detector for receiving emitted light and for converting it into electric current, **characterized by**
transmitting with the light source of the power transmitter a substantially parallel light, the intensity of which is substantially less than the allowed maximum eye exposure,
detecting by the photo-detector of the power receiver the light emitted by the light source,
determining the integrity of the light beam emitted by the light source and detected by the photo-detector,
transmitting a control signal is transmitted from the power receiver to the power transmitter in response to finding the light beam intact, and
increasing the intensity of the light transmitted by the light source of the power transmitter in response to receiving said control signal from the power receiver concerning the integrity of the light beam.

2. A method as claimed in claim 1, **characterized by**
transmitting from the power receiver the control signal on the reception of the intact light beam at regular intervals,
ending the transmission of the control signal in response to detecting a disturbance in the light emitted by the light source, and
switching off the light source of the power transmitter.

3. A method as claimed in claim 1 or 2, **characterized in that**
the photo-detector is a photo-detector matrix,
whereby the integrity of the light beam emitted by the light source is determined on the basis of the active matrix frames of the photo-detector matrix.

4. A method as claimed in any one of the preceding claims, **characterized by**
registering the power receiver to the power transmitter before power transmission by transmitting from the power receiver a registration message by using the control signal.

5. A method as claimed in claim 4, **characterized by**
switching on a LED of the power receiver operating in the infrared range after the registration message is transmitted.

6. A method as claimed in claim 5, **characterized by**
determining the position of the power receiver with a PSD diode of the power transmitter, which is arranged to detect the LED operating in the infrared range in the power receiver in response to the reception of the registration message.

7. A method as claimed in claim 6, **characterized by**
deflecting the light emitted by the light source of the power transmitter according to a predetermined route in the direction of the power receiver to determine the exact location of the power receiver.

8. A method as claimed in any one of the preceding claims, **characterized by**
connecting the power receiver to a power-consuming external device or to charging means, such as a battery, and
conducting the electric current generated by the photo-detector to the power-consuming external device or to the charging means.

9. A wireless power transmission system that comprises a power transmitter and at least one power receiver, the power transmitter comprising a light source, means for directing the light emitted by the light source in a desired direction, and means for controlling the intensity of the light emitted by the light source, and the power receiver comprising a photo-detector for receiving emitted light and for converting it into electric current, **characterized in that**
the power transmitter comprises control means for controlling the intensity of the light emitted by the light source in such a manner that the intensity is substantially less than the allowed maximum eye exposure,
the power receiver comprises a photo-detector for detecting the light emitted by the light source and for determining the integrity of the received light beam, and transmission means responsive to the determination of integrity, which are arranged to transmit a control signal to the power transmitter in response to finding the light beam intact,
whereby in response to receiving the control signal, the control means of the power transmitter are arranged to increase the intensity of the light transmitted by the light source of the power transmitter.

10. A system as claimed in claim 9, **characterized in that**
the power receiver is arranged to transmit to the power transmitter the control signal on the reception of the intact light beam at regular intervals, and, in response to detecting a disturbance in the light emitted by the light source, to stop the transmission of the control signal,
whereby the power transmitter is arranged to switch off the light source.

11. A system as claimed in claim 9 or 10, **characterized in that**
the photo-detector is a photo-detector matrix, and the integrity of the light beam emitted by the light source is determined on the basis of the active matrix frames of the photo-detector matrix.

12. A system as claimed in claim 11,**characterized in that**
the photo-detector matrix is a prismatic square matrix, the planes of which are set so that an incoming light beam is reflected back to its direction of incidence through reflection via at least two planes.

13. A system as claimed in any one of claims 9 to 12, **characterized in that**
the power receiver is arranged to register to the power transmitter before power transmission by transmitting a registration message in the control signal.

14. A system as claimed in claim 13, **characterized in that**
the power receiver comprises a light emitting diode operating in the infrared range, which is arranged to be switched on after the registration message is transmitted.

15. A system as claimed in claim 14, **characterized in that**
the power transmitter comprises a PSD diode that is arranged to detect the LED operating in the infrared range in the power receiver in response to receiving the registration message.

16. A system as claimed in claim 15, **characterized in that**
the power transmitter comprises deflection means for deflecting the light emitted by the light source according to a predetermined route in the direction of the power receiver to determine the exact location of the power receiver.

17. A system as claimed in any one of claims 9 to 16, **characterized in that**
the transmission means for transmitting the control signal comprise a short-range radio-frequency transmitter, such as a Bluetooth or WLAN transmitter.

18. A system as claimed in any one of claims 9 to 17, **characterized in that**
the power receiver is arranged to be connected to a power-consuming external device or to charging means, such as a battery, and
the power receiver comprises conducting means for conducting the electric current generated by the first photo-detector to the power-consuming external device or the charging means.

19. A system as claimed in any one of claims 9 to 18, **characterized in that**
the light source is a laser or a light emitting diode (LED).

20. A power transmitter for transmitting power wirelessly, comprising a light source, means for directing the light emitted by the light source in a desired direction, and means for controlling the intensity of the light emitted by the light source, **characterized in that**
the power transmitter comprises control means for controlling the intensity of the light emitted by the light source in such a manner that the intensity is substantially less than the allowed maximum eye exposure, and a receiver for receiving a control signal transmitted by a power receiver, the control signal indicating the integrity of the received emitted light beam,
whereby in response to receiving the control signal, the control means of the power transmitter are arranged to increase the intensity of the light transmitted by the light source of the power transmitter.

21. A power receiver comprising a photo-detector for receiving emitted light and for transforming it into electric current, **characterized in that**
the power receiver comprises a photo-detector for detecting said emitted light and for determining the integrity of the received light, and transmission means responsive to said determination of integrity and arranged to transmit a control signal to the power transmitter in response to finding the light beam intact.

22. A wireless surveillance system that comprises a base station and at least one surveillance device, such as a camera, the base station comprising a radio frequency transceiver for establishing a telecommunications connection to said at least one surveillance device, and the surveillance device, such as camera, comprising means for generating surveillance data and a radio frequency transceiver for transmitting the surveillance data wirelessly to the base station, **characterized in that**
the base station comprises a power transmitter that comprises a light source, means for directing the light emitted by the light source in a desired direction, and control means for controlling the intensity of the light emitted by the light source in such a manner that the intensity is substantially less than the allowed maximum eye exposure, and a receiver for receiving a control signal transmitted by a power receiver, the control signal indicating the integrity of the received emitted light beam,
the surveillance device comprises a power receiver that comprises a photo-detector for detecting said emitted light and for determining the integrity of the received light beam, and transmission means responsive to said determination of integrity, which are arranged to transmit a control signal to the power transmitter in response to finding the light beam intact,
whereby in response to receiving the control signal, the control means of the power transmitter are arranged to increase the intensity of the light transmitted by the light source of the power transmitter.

23. A surveillance system as claimed in claim 22, **characterized in that**
the photo-detector is a photo-detector matrix, and the integrity of the light beam emitted by the light source is arranged to be determined on the basis of the active matrix frames of the photo-detector matrix.

24. A surveillance system as claimed in claim 23, **characterized in that**
the photo-detector matrix is a prismatic square matrix, the planes of which are set so that an incoming light beam is reflected back to its direction of incidence through reflection via at least two planes.

25. A surveillance system as claimed in any one of claims 22 to 24, **characterized in that**
the wireless radio frequency data transmission is arranged through a Bluetooth or WLAN connection.
